# EUROPEAN PATENT SPECIFICATION

(11) **EP 1 884 634 B1**
(45) Date of publication and mention of the grant of the patent: **03.11.2010**
(21) Application number: 07015213.7
(22) Date of filing: 02.08.2007
(51) Int. Cl.: F01N 13/18, F28F 27/00, F01N 5/02

(54) **Support structure of exhaust system heat exchanger**
Stützstruktur für den Wärmetauscher eines Abgassystems
Structure de support pour un échangeur de chaleur dans un système d'échappement

(30) Priority: 04.08.2006 JP 2006213003
(43) Date of publication of application: 06.02.2008
(73) Proprietor: TOYOTA JIDOSHA KABUSHIKI KAISHA, Toyota-shi, Aichi-ken, 471-8571 (JP)
(72) Inventor: Mabuchi, Tomoki, Toyota-shi Aichi-ken 471-8571 (JP); Nishino, Hisashi, Toyota-shi Aichi-ken 471-8571 (JP)
(74) Representative: Kuhnen & Wacker

(56) References cited:
- EP-A- 1 298 403
- WO-A-00/26514
- DE-A1- 4 423 940
- DE-A1- 19 836 889
- GB-A- 2 034 261
- JP-A- 2000 104 543
- JP-A- 2002 371 841
- US-A- 2 912 198
- US-A1- 2003 160 136
- US-A1- 2006 054 381

## Description

### BACKGROUND OF THE INVENTION

### Field of the Invention

The present invention relates to a support structure of an exhaust system heat exchanger for supporting, at a vehicle body, an exhaust system heat exchanger that carries out heat exchange between exhaust gas and a cooling medium of, for example, a vehicle.

### Description of the Related Art

An exhaust heat recovery muffler in which an exhaust heat recovery portion is disposed so as to cover an outer side of a muffler portion for reducing exhaust noise is known (refer to, for example, Japanese Patent Application Laid-Open (JP-A) No. 2006-105124).

However, in the above-mentioned conventional art, a structure for supporting the exhaust heat recovery muffler, which is heavier than an ordinary muffler, at a vehicle body has not been considered.

DE 198 36 889 A1 shows an exhaust gas heat exchanger in a caseless construction, comprising several parallel saucer-type heat exchanger plates building flow channels for the cooling water of a combustion engine wherein the flow channels for the exhaust gas are arranged in-between the flow channels of the cooling water and are built as flat pipes. The exhaust gas pipe can be attached to the heat exchanger by screws, brackets or clamping rings. At least one of the flow channels shows a wavelike structured surface.

The US 2006/0054381 A1 shows an exhaust heat recovery muffler including a muffler unit having an outer surface thereof covered, an exhaust heat recovery unit disposed integrally with the muffler unit, and a switching valve that switches the flow of exhaust gas into the muffler unit and into the exhaust heat recovery unit. An outer pipe of the muffler unit and a cylindrical shell of the exhaust heat recovery unit, covering the outer circumference of the outer pipe, are coaxially disposed. The exhaust heat recovery unit includes a heat exchange chamber formed by a pair of partitions provided between the inner circumference of the shell and the outer circumference of the outer pipe, and small-diameter pipes penetrating through the pair of partitions and extending through the heat exchange chamber. A heat exchange medium e.g. a cooling liquid of an combustion engine flows inside of the heat exchange chamber.

The WO 00/26514 discloses an exhaust gas cooler for reducing the temperature of exhaust gases of an internal combustion engine, comprising an external tube extending between two tube plates or end walls and defining a coolant chamber, coolant inlet and outlet means communicating with the coolant chamber and a plurality of internal tubes extending between the endwalls and arranged to carry the exhaust gas through the coolant chamber. The cross-sectional shape of the exterior tube has a planar face which simplifies the fitting of mounting brackets and placement within an engine compartment.

The JP 2002371841 shows an engine exhaust device for vehicles which has a muffler provided in a position in the middle of the exhaust pipe system and an insulator which supports the exhaust system members to the body. A first spherical joint permits a displacement of the exhaust device in the vertical direction of the vehicle at positions of inclined parts of a front tube wherein the axis of the tube faces the direction of a roll center of the transversely mounted engine and a first center tube behind the vehicle of the transversely mounted engine.

### SUMMARY OF THE INVENTION

In view of the above circumstances, an object of the present invention is to obtain a support structure of an exhaust system heat exchanger that can support the exhaust system heat exchanger at a vehicle body in an excellent manner.

A support structure of an exhaust system heat exchanger according to a first aspect of the present invention comprises an exhaust system heat exchanger that is provided at an exhaust system path of a vehicle and has a heat exchange portion which carries out heat exchange between exhaust gas and a cooling medium, a supported member that is fixed at an outer contour portion constituting a portion other than the heat exchange portion in the exhaust system heat exchanger, and a support member that supports the supported member at a vehicle body.

In the support structure of an exhaust system heat exchanger of the first aspect, the exhaust system heat exchanger is supported at the vehicle body via a supported member fixed at the exhaust system heat exchanger and the support member. Here, since the supported member is fixed at a portion other than (a portion constituting) the heat exchange portion in the outer contour portion of the exhaust system heat exchanger, the support structure is prevented from having an effect on the heat exchange performance. That is to say, for example, aging deterioration of (an outer contour portion constituting) the heat exchange portion resulting from provision of the supported member and, for example, degradation of the flow of the cooling medium resulting from provision of the supported member can be prevented.

As a result, in the support structure of an exhaust system heat exchanger of the first aspect, the exhaust system heat exchanger can be supported at the vehicle body in an excellent manner.

In the support structure of an exhaust system heat exchanger of the first aspect, the exhaust system heat exchanger comprises a bypass pipe portion provided at an axial center thereof for bypassing the heat exchange portion, and the supported member is fixed upstream or downstream in an exhaust gas flow direction with respect to the heat exchange portion in the outer contour portion of the exhaust system heat exchanger and at a portion that overlaps with the bypass pipe portion in the exhaust gas flow direction.

In the support structure of an exhaust system heat exchanger of the above configuration, since the supported member is fixed at a portion that overlaps with the bypass pipe portion in the outer contour portion of the exhaust system heat exchanger, when exhaust gas bypasses the heat exchange portion, a fixing portion of the supported member in the outer contour portion is prevented from contacting high-temperature exhaust gas. In particular, in a configuration in which the fixing portion of the supported member is at the exhaust gas flow direction downstream side in the outer contour portion, even when heat exchange is carried out, the fixing portion of the supported member in the outer contour portion is contacted with low-temperature exhaust gas that has undergone heat exchange.

Further, in the support structure of an exhaust system heat exchanger of the first aspect, the supported member may comprise a supported portion positioned so as to overlap in an exhaust gas flow direction with respect to the heat exchange portion of the exhaust system heat exchanger, and the support member may include an elastic member, one end side of the elastic member being attached to the supported portion of the supported member, and the other end side of the elastic member being supported by the vehicle body.

In the support structure of an exhaust system heat exchanger of the above configuration, since the elastic member is disposed to a side of (including above and below) the heat exchange portion of the exhaust system heat exchanger, at which there is little heat radiation in the exhaust system path, it is possible to dispose the elastic member in near proximity to the exhaust system heat exchanger.

A support structure of an exhaust system heat exchanger of a second aspect of the present invention comprises an exhaust system heat exchanger that is provided at an exhaust system path of a vehicle and has a heat exchange portion which carries out heat exchange between exhaust gas and a cooling medium, a supported member that is provided at a component part of the exhaust system path and comprises a supported portion overlapping in an exhaust gas flow direction with respect to the heat exchange portion of the exhaust system heat exchanger, and an elastic member, one end side of the elastic member being attached to the supported portion of the supported member, and the other end side of the elastic member being supported by a vehicle body.

In the support structure of an exhaust system heat exchanger of the second aspect, the exhaust system heat exchanger is supported at the vehicle body via the supported member provided at a part constituting the exhaust system path (including the exhaust system heat exchanger itself, an exhaust pipe disposed to the front and rear of the exhaust system heat exchanger, a muffler, and the like), and a supporting member. Here, since the elastic member is disposed to a side of (including above and below) the heat exchange portion of the exhaust system heat exchanger, at which there is little heat radiation in the exhaust system path, it is possible to provide a configuration in which heat countermeasures for the elastic member are unnecessary, and in which the elastic member is disposed in near proximity to the exhaust system heat exchanger to increase support rigidity.

As a result, in the support structure of an exhaust system heat exchanger of the second aspect of the present invention, the exhaust system heat exchanger can be supported at the vehicle body in an excellent manner.

In the support structure of an exhaust system heat exchanger relating to the first or second aspect of the present invention, a flow path of the cooling medium may be positioned at an outermost layer of the heat exchange portion of the exhaust system heat exchanger.

In the support structure of an exhaust system heat exchanger of the above configuration, since at least a portion of the cooling medium flow path configures the outermost layer of the heat exchange portion, there is little heat radiation from the heat exchange portion. Further, although rust is easily generated at a portion contacting the cooling medium in the outer contour portion of the exhaust system heat exchanger if a welding portion is provided thereat in a case where the cooling medium is a liquid, liquid leakage and the like resulting from rust (aging deterioration) is prevented if a configuration is provided in which the supported portion is not provided at the heat exchange portion.

As explained above, the support structure of an exhaust system heat exchanger according to the present invention has the excellent effect of being able to support the exhaust system heat exchanger at the vehicle body in an excellent manner.

### BRIEF DESCRIPTION OF THE DRAWINGS

FIG 1 is a sectional side view showing a main portion of a vehicle exhaust system structure relating to an exemplary embodiment of the present invention.
FIG 2 is a sectional side view of an exhaust system heat exchanger configuring the vehicle exhaust system structure relating to the exemplary embodiment of the present invention.
FIG 3 is a plan view of the exhaust system heat exchanger configuring the vehicle exhaust system structure relating to the exemplary embodiment of the present invention.
FIG 4 is an axis-orthogonal sectional view showing a valve device configuring the vehicle exhaust system structure relating to the exemplary embodiment of the present invention.
FIG 5 is a plan view showing an outline overall configuration of the vehicle exhaust system structure relating to the exemplary embodiment of the present invention.
FIG 6 is a side view showing the outline overall configuration of the vehicle exhaust system structure relating to the exemplary embodiment of the present invention.

### DETAILED DESCRIPTION OF THE INVENTION

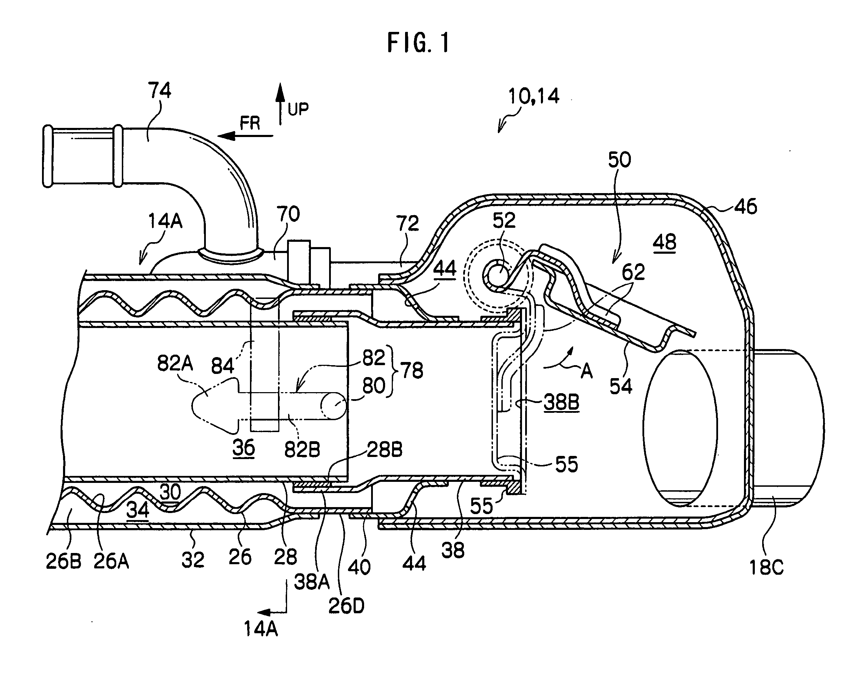

Explanation will now be given of a vehicle exhaust system structure 10 to which the support structure of an exhaust system heat exchanger according to an exemplary embodiment of the present invention has been applied, with reference to FIG 1 to FIG 6. First, an outline overall configuration of the vehicle exhaust system structure 10 will be explained, next an exhaust system heat exchanger 14 will be explained, and thereafter, a support structure of the exhaust system heat exchanger 14, which is the main portion of the present invention, will be explained. It is to be noted that when the terms upstream and downstream are used in the explanation below, this refers to upstream and downstream in the flow direction of the exhaust gas. Also, the arrow FR, the arrow UP, and the arrow W shown in the drawings respectively indicate the front side in the vehicle body front-rear direction (traveling direction) of a vehicle to which the vehicle exhaust system structure 10 has been applied, the upper side in the vehicle body up-down direction, and the vehicle width direction.

### (Overall Configuration)

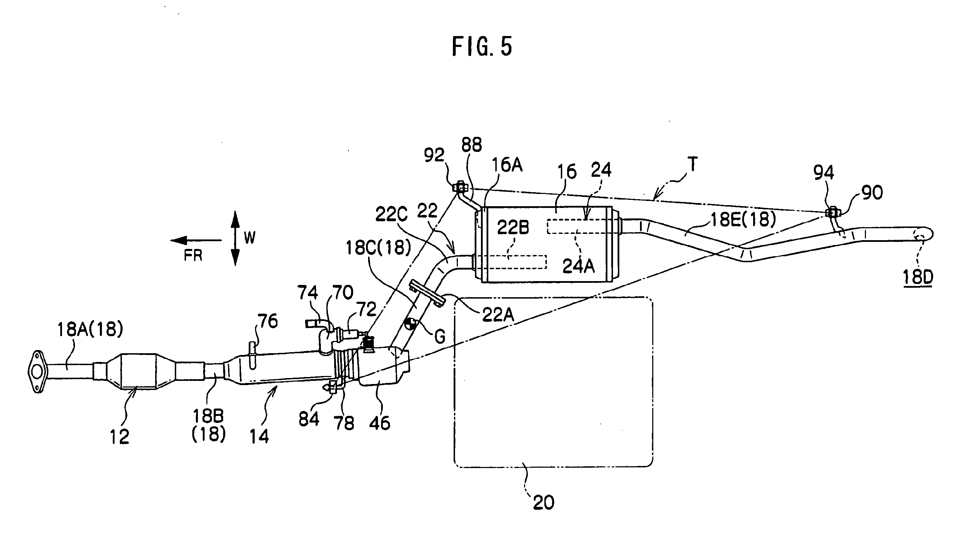

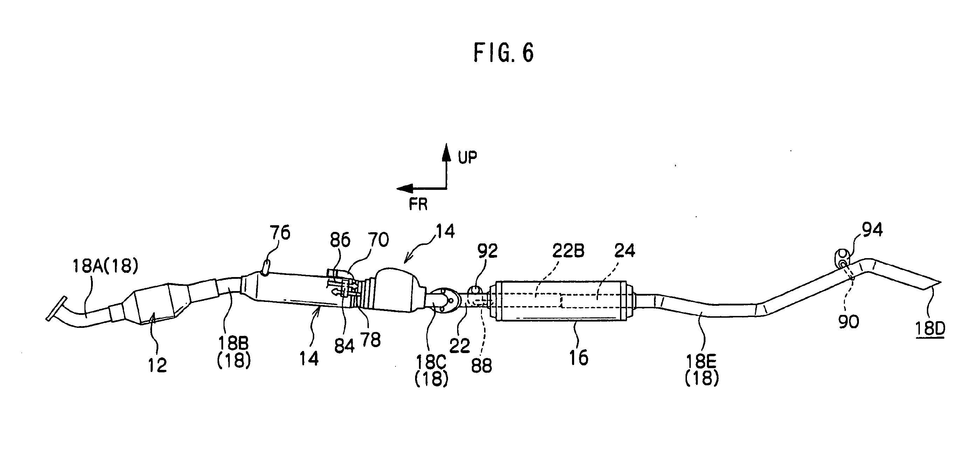

In FIG 5, an outline overall configuration of the vehicle exhaust system structure 10 is shown in plan view, and in FIG 6, the vehicle exhaust system structure 10 is shown in side view. As is shown in these figures, the vehicle exhaust system structure 10 is provided with, in sequence from upstream, a catalytic converter 12 for cleaning exhaust gas, an exhaust system heat exchanger 14 which recovers heat from the exhaust gas for assisting engine warm-up and heating maintenance, and a muffler 16 for reducing (silencing) exhaust noise, and these components are communicated with each other in series with an exhaust pipe 18.

The downstream end of the exhaust pipe 18A is connected to the upstream side of the catalytic converter 12, and the upstream end of the exhaust pipe 18A is connected to the exhaust manifold of an internal combustion engine, which not illustrated in the figure, in such a manner that exhaust gas from the internal combustion engine is introduced therein. Further, the longitudinal directions of each of the catalytic converter 12 and the exhaust system heat exchanger 14 substantially correspond to the vehicle body front-rear direction, and the catalytic converter 12 and the exhaust system heat exchanger 14 are connected to each other substantially in a straight line, when seen in plan view, by an exhaust pipe 18B. In this exemplary embodiment, the exhaust pipe 18A, the catalytic converter 12, the exhaust pipe 18B and the exhaust system heat exchanger 14 are disposed substantially in a straight line when seen in plan view. However, an exhaust pipe 18C, which serves as an exhaust gas outflow pipe portion, and whose upstream end is connected to the downstream end of the exhaust system heat exchanger 14, is inclined with respect to the vehicle body front-rear direction when seen in plan view. As a result, the vehicle exhaust system structure 10 avoids a fuel tank 20 disposed to the rear of the exhaust system heat exchanger 14.

The length direction of the muffler 16 substantially corresponds to the vehicle body front-rear direction, and the muffler 16 is disposed in parallel with the fuel tank 20 in the vehicle width direction. The downstream end of the exhaust pipe 18C is connected to the upstream end of a muffler inlet pipe 22. An upstream portion 22A of the muffler inlet pipe 22 is inclined with respect to the vehicle body front-rear direction so as to form a substantially straight line with the exhaust pipe 18C. A downstream portion 22B of the muffler inlet pipe 22 is disposed mainly within the muffler 16, and the length direction thereof is along the vehicle body front-rear direction. An intermediate portion 22C of the muffler inlet pipe 22 is bent so as to couple the upstream portion 22A and the downstream portion 22B. Furthermore, a muffler outlet pipe 24 that has an upstream portion 24A disposed within the muffler 16 is integrated with an exhaust pipe 18E whose downstream end serves as an exhaust gas atmosphere release portion 18D.

A layout of the vehicle exhaust system structure 10 such as explained above is applied, for example, to a small, front engine, front-wheel drive (FF) vehicle.

### (Configuration of exhaust system heat exchanger)

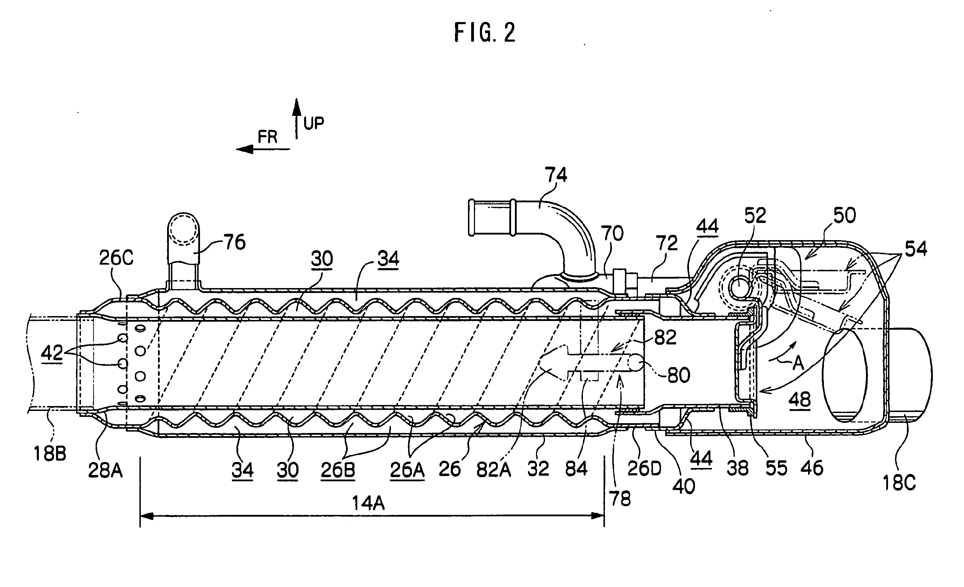

The exhaust system heat exchanger 14 is configured to recover heat from the exhaust gas to engine cooling water serving as a cooling medium, and as shown in FIG 2, the exhaust system heat exchanger 14 is provided with a partition wall pipe 26 that partitions the flow path of the exhaust gas from the flow path of the engine cooling water. In this exemplary embodiment, there are spiral grooves 26A and 26B formed in a spiral shape at the inside and outside of the pipe wall of the partition wall pipe 26. The spiral groove 26A and the spiral groove 26B are formed over substantially the entire length of a heat exchange portion 14A which carries out heat exchange between the exhaust gas and the engine cooling water, and at the front and rear of the partition wall pipe 26, there are an exhaust gas introduction portion 26C and an exhaust gas exhaust portion 26D that extend, respectively, to the front and to the rear of the heat exchange portion 14A.

An inner pipe 28 serving as a bypass pipe portion formed in a substantially cylindrical shape is disposed coaxially at the inner side of the partition wall pipe 26. The space formed between the partition wall pipe 26 and the inner pipe 28 is the exhaust gas flow path 30 of the exhaust system heat exchanger 14. Furthermore, the partition wall pipe 26 is covered from the outer circumferential side thereof by an outer pipe 32 that is formed in a substantially cylindrical shape and disposed coaxially with the partitioning wall pipe 26. The space between the partition wall pipe 26 and the outer pipe 32 is the engine cooling water flow path 34 of the exhaust system heat exchanger 14.

In the exhaust system heat exchanger 14, the region in which the engine cooling water flow path 34 is formed in the exhaust gas flow direction is the heat exchange portion 14A in which heat exchange between the exhaust gas and the engine cooling water is carried out, and the inner pipe 28 projects out further at the upstream side and at the downstream side than the heat exchange portion 14A. The space in the inner pipe 28 in the exhaust system heat exchanger 14 is a bypass flow path 36 serving as an upstream gas flow path for bypassing the heat exchange portion 14A in the exhaust system heat exchanger 14.

More specifically, as shown in FIG 2, an upstream end 28A of the inner pipe 28 is connected to the downstream end of the exhaust pipe 18B, and a downstream end 28B of the inner pipe 28 is connected substantially coaxially to an upstream end 38A of an exhaust gas guide pipe 38. It is to be noted that in place of the exhaust gas guide pipe 38, the inner pipe 28 may be extended at the downstream side. Furthermore, the front end of the exhaust gas introduction portion 26C (portion that is further upstream than the heat exchange portion 14A), which protrudes further upstream than the outer pipe 32 (engine cooling water flow path 34) in the partition wall pipe 26, is connected in a gastight state to the outer circumferential surface of the upstream end 28A of the inner pipe 28. Furthermore, the exhaust gas exhaust portion 26D (portion that is further downstream than the heat exchange portion 14A) of the partition wall pipe 26, which protrudes further downstream than the outer pipe 32 (engine cooling water flow path 34) in the partition wall pipe 26, is connected in a gastight state to the exhaust gas guide pipe 38 via an end pipe 40.

At the portion in the inner pipe 28 that is positioned inside of the exhaust gas introduction portion 26C of the partition wall pipe 26, through holes 42 that communicate the bypass flow path 36, which is a space inside the inner pipe 28, with the exhaust gas flow path 30 of the exhaust system heat exchanger 14 are provided. That is to say, the through holes 42 configure a branch portion between the exhaust gas flow path 30 and the bypass flow path 36. Meanwhile, through holes 44 that communicate the inside and the outside of the exhaust gas flow path 30 are provided in the end pipe 40. The through holes 44 and a downstream side opening end 38B of the exhaust gas guide pipe 38 respectively open to an exhaust gas exit header 48, which is a space inside a heat exchanger rear portion shell 46, and an upstream side opening end 46A thereof is connected in a gastight state to the end pipe 40.

Accordingly, in the exhaust system heat exchanger 14, a configuration is provided in which the exhaust gas that bypasses the heat exchange portion 14A and passes through the bypass flow path 36 reaches the exhaust gas exit header 48 inside the heat exchanger rear portion shell 46 via the inner side of the exhaust gas guide pipe 38, while the exhaust gas that passes through the exhaust gas flow path 30 via the through holes 42 reaches the exhaust gas exit header 48 inside the heat exchanger rear portion shell 46 via the through holes 44 which are at the outer side of the exhaust gas guide pipe 38.

Furthermore, the exhaust system heat exchanger 14 is provided with a valve device 50 for opening and closing the downstream side opening end 38B of the exhaust gas guide pipe 38. As is also shown in FIG 1, the valve device 50 is provided with a valve 54 that is able to assume, by rotational movement around a rotational shaft 52 that is supported by the heat exchanger rear portion shell 46, a closed position in which the downstream side opening end 38B of the exhaust gas guide pipe 38 is closed off (refer to the imaginary lines in FIG 1), and an open position in which the downstream side opening end 38B of the exhaust gas guide pipe 38 is opened up by rotational movement from the closed position in the direction of arrow A (refer to the solid lines in FIG 1). The valve 54 positioned in the closed position is configured so as to abut a valve seat (seal) 55 that is provided around the downstream side opening end 38B in the exhaust gas guide pipe 38.

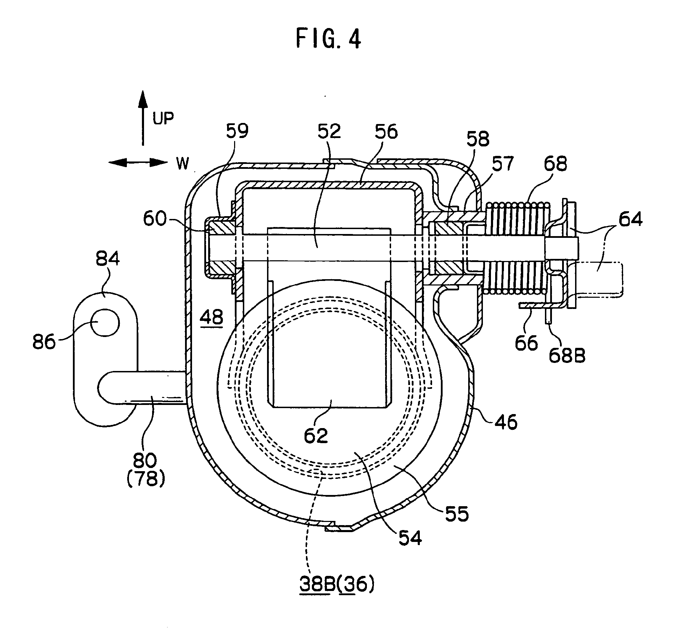

As shown in FIG 4, the rotational shaft 52 is supported so as to be able to freely rotate with respect to the heat exchanger rear portion shell 46, at two places spaced apart in the longitudinal direction thereof by a shaft bearing 58 that is retained at a shaft bearing holder 57 mounted at a frame 56 fixed at the exhaust gas guide pipe 38 and by a shaft bearing 60 that is retained at a shaft bearing holder 59 mounted at the frame 56. The valve 54 is connected to the rotational shaft 52 via an arm 62 so as to be able to rotate integrally therewith. As a result, the valve 54 can assume the above-mentioned closed position and open position by rotating around the rotational shaft 52. Further, a lever 64 is fixed at an end portion, of the rotational shaft 52, that protrudes at the outer side of the heat exchanger rear portion shell 46, and a stopper 66 is provided at the lever 64.

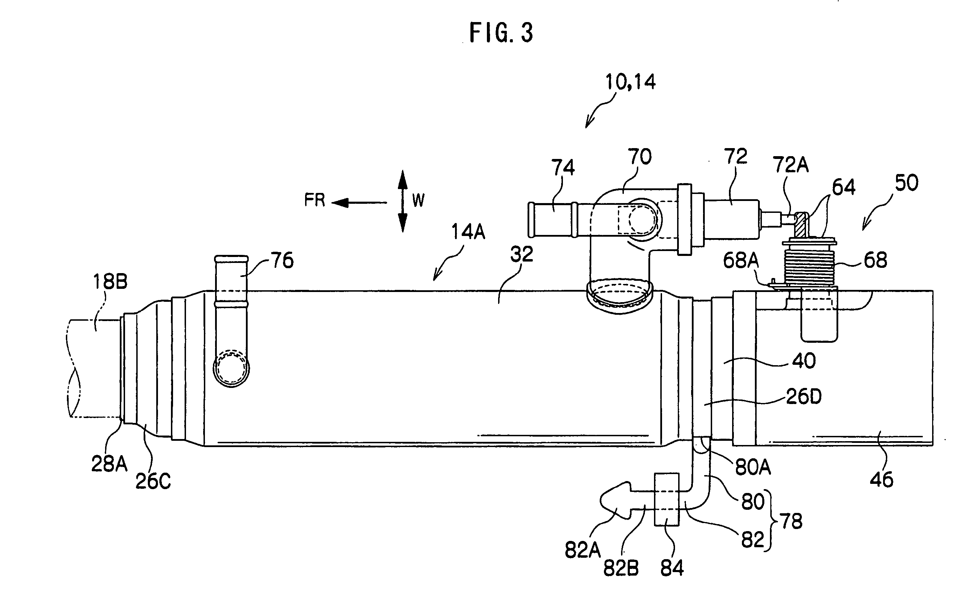

One end 68A of a return spring 68 serving as a biasing member is locked at the heat exchanger rear portion shell 46 (refer to FIG 3), and the other end 68B of the return spring 68 is locked at the stopper 66. The rotational shaft 52 is biased in the direction in which the valve 54 assumes the closed position by the biasing force of the return spring 68. As a result, in the exhaust system heat exchanger 14, when the pressure of the exhaust gas is low, the valve 54 closes off the exhaust gas guide pipe 38, that is to say, the bypass flow path 36, due to the biasing force of the return spring 56, and exhaust gas passes through the exhaust gas flow path 30 of the heat exchange portion 14A. On the other hand, when the pressure of the exhaust gas becomes equal to or greater than a predetermined value, the valve 54 assumes, against the biasing force of the return spring 68, an open position corresponding to the pressure of the exhaust gas. In this exemplary embodiment, the valve 54 is set so as to assume an open position in which a maximum degree of opening by the pressure of the exhaust gas is obtained, due to the pressure of the exhaust gas when a maximum output is generated by the internal combustion engine described above.

Furthermore, in this exemplary embodiment, the valve device 50 is configured such that when the temperature of the engine cooling water carrying out heat exchange with the exhaust gas is equal to or greater than a predetermined temperature, the valve 54 is mandatorily retained in the open position, regardless of the pressure of the exhaust gas. Specifically, a first cooling water inlet pipe 70, the interior of which is communicated with the engine cooling water flow path 34, is connected to the outer pipe 32 at the downstream side thereof in the exhaust gas flow direction. A thermo-actuator 72 is disposed at an end portion of the first cooling water inlet pipe 70, and the thermo-actuator 72 comprises a pressure rod 72A which increases a protruding amount with respect to the first cooling water inlet pipe 70 by the thermal expansion of wax that is filled inside the thermo-actuator 72. The pressure rod 72A is configured such that, when the engine cooling water temperature is 80°C or higher, the pressure rod 72A pushes the lever 64 so that the valve 54 assumes a fully open position in which the degree of opening is greater than that of the above-mentioned open position obtained by the exhaust gas pressure (the fully open position is maintained). As shown by the dashed-single dotted lines in FIG 2, the fully open position is a position rotated approximately 90° from the closed position in the arrow A direction.

As shown in FIG. 3, a second cooling water inlet pipe 74, for introducing engine cooling water to the engine cooling water flow path 34 of the exhaust system heat exchanger 14 via the first cooling water inlet pipe 70, is connected to an intermediate portion of the first cooling water inlet pipe 70. Further, a cooling water outlet pipe 76, for discharging engine cooling water from the engine cooling water flow path 34, is connected at the upstream side of the outer pipe 32 in the exhaust gas flow direction. The cooling water outlet pipe 76 is communicated with approximately the top portion (the uppermost portion) in the up-down direction of the outer pipe 32. The second cooling water inlet pipe 74 is communicated with a portion that is the uppermost portion of the first cooling water inlet pipe 70, which itself is communicated just slightly below the top portion in the up-down direction of the outer pipe 32, and that is higher than the uppermost portion of the outer pipe 32. The second cooling water inlet pipe 74 and the cooling water outlet pipe 76 are connected to a cooling water circulation path, which includes the internal combustion engine, a radiator, and a heater core, so as to be in series with the internal combustion engine at least along the engine cooling water flow.

Due to the foregoing, the exhaust system heat exchanger 14 is a countercurrent heat exchanger in which the direction of flow of the exhaust gas and the direction of flow of the engine cooling water are in opposite directions, and in this exemplary embodiment, the exhaust system heat exchanger 14 has a configuration that is compact and has high heat exchange efficiency, due to the exhaust gas generating a spiral-shaped flow along the spiral groove 26A and the engine cooling water generating a spiral-shaped flow in the opposite direction to that of the exhaust gas along the spiral groove 26B. Furthermore, the exhaust system heat exchanger 14 is configured such that the pressure loss (back pressure) of the exhaust gas due to passing through the bypass flow path 36 is sufficiently small relative to the pressure loss of the exhaust gas due to passing through the exhaust gas flow path 30, and the exhaust gas mainly flows through the bypass flow path 36 when the valve 54 assumes an open position.

### (Support structure of exhaust system heat exchanger)

As shown in FIG 3, a support rod 78 serving as a supported member for supporting (the exhaust system including) the exhaust system heat exchanger 14 with respect to the vehicle body is fixed at the exhaust gas exhaust portion 26D (portion exposed between the outer pipe 32 and the end pipe 40) forming a portion of the outer contour of the exhaust system heat exchanger 14 in the partition wall pipe 26.

The support rod 78 is formed in a substantial L-shape when seen in plan view and is configured to include a projecting portion 80, which is fixed by one end 80A thereof being welded to the outer surface of the exhaust gas exhaust portion 26D of the partition wall pipe 26, and which projects in a substantially orthogonal direction to the axial direction (vehicle body front-rear direction) of the exhaust system heat exchanger 14, and a supported portion 82, which extends from the projecting end side of the projecting portion 80 along the axial direction of the exhaust system heat exchanger 14. At the distal end of the supported portion 82, an expanded diameter portion 82A for retention of a support rubber 84, which will be described below, is formed.

In this exemplary embodiment, the supported portion 82 extends toward the upstream side from the projecting portion 80, and as shown in FIG 1 and FIG 2, the front portion 82B thereof is overlapped with the heat exchange portion 14A when seen in side view. In other words, the support rod 78 is disposed such that the front portion 82B, which is at least a portion of the supported portion 82 of the support rod 78, overlaps with the heat exchange portion 14A of the exhaust system heat exchanger 14.

Meanwhile, as shown in FIG 1 and FIG 2, the exhaust gas exhaust portion 26D of the partition wall pipe 26 to which the one end 80A of the projecting portion 80 is fixed constitutes a portion that is further to the downstream side than the heat exchange portion 14A in the outer contour of the exhaust system heat exchanger 14. In other words, the one end 80A of the projecting portion 80 is welding connected to a site that does not contact the engine cooling water in the exhaust system heat exchanger 14. Further, the inner pipe 28 is disposed at the radial direction inner side of the exhaust gas exhaust portion 26D of the partition wall pipe 26, and the one end 80A of the projecting portion 80 is welding connected to a site that is not contacted by the exhaust gas flowing through the bypass flow path 36 in the exhaust system heat exchanger 14.

The supported portion 82 of the support rod 78 described above is inserted into the support rubber 84 serving as an elastic member, such that relative displacement (heat elongation absorption) in the longitudinal direction is possible. As shown in FIG 6, at the upper side of the portion into which the supported portion 82 is inserted in the support rubber 84, another support rod 86 that is fixed at the vehicle body is inserted. As a result, (the exhaust system including) the exhaust system heat exchanger 14 is supported with respect to the vehicle body. Although not shown in the drawings, the exhaust system heat exchanger 14 is disposed within a floor tunnel of the vehicle body and is coupled to and supported by the support rod 86, which is fixed at a tunnel wall (reinforcement), via the support rubber 84.

Further, in the vehicle exhaust system structure 10 as shown in FIG 5, a front end 16A of the muffler 16 and the exhaust pipe 18E are respectively supported at the vehicle body via support rods 88 and 90 and support rubbers 92 and 94. Further, a center of gravity G of the vehicle exhaust system structure 10 is disposed at the inner side of an imaginary triangle T connecting the three support rubbers 84, 92 and 94. In other words, the arrangement (dimension and shape) of the support rod 78 in the exhaust system heat exchanger 14 is determined so that the center of gravity G of the vehicle exhaust system structure 10 is positioned at the inner side of the triangle T.

Next, operation of this exemplary embodiment will be explained.

In the vehicle exhaust system structure 10 of the configuration described above, when the engine cooling water temperature is low, the valve 54 is made to be free with respect to the thermo-actuator 72, and the valve device 50 operates as a self-pressure valve. For this reason, under driving conditions in which the pressure of the exhaust gas is low, the exhaust gas guide pipe 38, that is, the bypass flow path 36, is closed off due to the biasing force of the return spring 68, exhaust gas flows through the exhaust gas flow path 30 of the heat exchange portion 14A, and heat exchange with the engine cooling water flowing through the engine cooling water flow path 34 is carried out. As a result, promotion of warm-up of the internal combustion engine and heating maintenance during low-temperature start-up is achieved.

When the pressure of the exhaust gas increases under driving conditions, such as, for example, acceleration or hill-climbing, in which the output of the internal combustion engine increases, the valve 54 which receives the pressure of this exhaust gas undergoes rotational movement against the biasing force of the return spring 68 in the arrow A direction to reach an open position. As a result, the exhaust gas flows mainly through the bypass flow path 36, and compared with the case where the exhaust gas flows through the exhaust gas flow path 30, the back pressure is reduced. That is to say, in the vehicle exhaust system structure 10 equipped with the valve device 50 functioning as a self-pressure valve, in a case where back pressure reduction for securing output takes priority over exhaust heat recovery for warm-up of the internal combustion engine or the like, reduction of back pressure is automatically achieved due to the exhaust gas bypassing the heat exchange portion 14A and flowing through the bypass flow path 36. Further, in the event that the internal combustion engine generates maximum output, the valve 54 assumes an induction position (maximum degree of opening by the pressure of the exhaust gas) shown in FIG 1 by the pressure of the exhaust gas.

Further, in the vehicle exhaust system structure 10, when the engine cooling water temperature becomes equal to or greater than 80°C, the pressure rod 72A of the thermo-actuator 72 presses the lever 64 of the rotational shaft 52 to retain the valve 54 in the fully open position. As a result, the exhaust gas flows mainly through the bypass flow path 36 and is exhausted from the exhaust pipe 18C via the exhaust gas guide pipe 38 and the exhaust gas exit header 48 of the heat exchanger rear portion shell 46. In other words, in a driving state in which recovery of exhaust heat is unnecessary, the exhaust gas flow path is automatically switched to the bypass flow path 36.

In the vehicle exhaust system structure 10, since the one end 80A of the projecting portion 80 in the support rod 78 for supporting the exhaust system heat exchanger 14 with respect to the vehicle body is welding connected to the exhaust gas exhaust portion 26D of the partition wall pipe 26 in the exhaust system heat exchanger 14, the welding portion does not contact the engine cooling water. For this reason, the outer contour of the exhaust system heat exchanger 14 has a configuration in which rust induced by the welding hardly occurs. Accordingly, growth of rust resulting in water leakage due to long-term use is prevented.

Further, since the support rod 78 is not welded at (a portion of) the outer pipe 32 constituting the engine cooling water flow path 34 in the outer contour of the exhaust system heat exchanger 14, the formation of rear beads accompanying the welding within the engine cooling water flow path 34 is prevented. For this reason, the flow of the engine cooling water, which has a higher flow resistance compared with the exhaust gas, is not inhibited by such rear beads, and excellent heat exchange performance can be obtained.

Furthermore, in the vehicle exhaust system structure 10, since heat transmission to the support rod 78 fixed at the exhaust gas exhaust portion 26D of the partition wall pipe 26 is transmitted from exhaust gas that has been cooled by heat exchange with the engine cooling water in the heat exchange portion 14A, or transmitted via the exhaust gas flow path 30 (in this case, functioning as an insulating layer) from exhaust gas mainly flowing through the bypass flow path 36, the support rod 78 hardly reaches a high temperature. Meanwhile, since the support rubber 84 is disposed to the side of the heat exchange portion 14A, that is, the engine cooling water flow path 34, the amount of heat emitted (radiated) from the vehicle exhaust system structure 10 is small. As a result, the amount of heat received by the support rubber 84 due to both transmission and radiation is small.

Due to these features, the support rubber 84 can be disposed in close proximity to the exhaust system heat exchanger 14, or in other words, the support rod 78 (in particular, the projecting portion 80) can be configured to be shorter, and the resonance frequency of the support system of the exhaust system heat exchanger 14 can be made higher. Further, since the clearance between the heat exchange portion 14A of the exhaust system heat exchanger 14 and the vehicle body (tunnel wall) can be made smaller, the support rod 86 can be configured to be shorter, and the resonance frequency of the support system of the exhaust system heat exchanger 14 can be made even higher. As a result, the noise vibration performance (NV performance) of the vehicle can be improved.

Further, in the vehicle exhaust system structure 10, since contacting of the fixing portion (exhaust gas exhaust portion 26D of the partition wall pipe 26) of the support rod 78 in the exhaust system heat exchanger 14 with high-temperature exhaust gas is suppressed as discussed above, energy (pulsational energy and the like) of the exhaust gas that is transmitted to the vehicle body via the support rod 78, the support rubber 84, and the support rod 86 is reduced. As a result, vehicle body floor vibration is suppressed. In particular, in a structure in which the support rod 86 is fixed to the tunnel wall of the floor tunnel positioned in the vicinity of a seat for occupant seating as in the present exemplary embodiment, the effect of suppressing transmission of exhaust gas energy via the support rod 78 is great.

It should be noted that, although an example has been shown in which the exhaust system heat exchanger 14 is supported at the vehicle body by the vehicle exhaust system structure 10 according to the exemplary embodiment of the present invention, the present invention is not limited thereto and can be applied to the exhaust system heat exchanger 14 with various forms.

Further, in the exemplary embodiment described above, although an example has been shown in which the support rod 78 is fixed to the exhaust gas exhaust portion 26D of the partition wall pipe 26, which is a portion other than the heat exchange portion 14A in the exhaust system heat exchanger 14, the present invention is not limited thereto, and for example, in a configuration in which the support rubber 84 overlaps with the heat exchange portion 14A when seen in side view, the support rod 78 may be fixed at the exhaust pipe 18 disposed in front or to the rear (upstream or downstream in the exhaust gas flow direction) of the exhaust system heat exchanger 14, or at the outer pipe 32 configuring the heat exchange portion 14A.

## Claims

1. A support structure of an exhaust system heat exchanger, comprising:
an exhaust system heat exchanger (14) that is provided at an exhaust system path (10) of a vehicle and has a heat exchange portion (14A) which carries out heat exchange between exhaust gas and a cooling medium;
a supported member that is fixed at an outer contour portion (26D) constituting a portion other than the heat exchange portion (14A) in the exhaust system heat exchanger (14); and
a support member (78) that supports the supported member at a vehicle body,
whereby
the supported member being fixed at a portion that is upstream or downstream in an exhaust gas flow direction with respect to the heat exchange portion (14A) in the outer contour portion (26D) of the exhaust system heat exchanger (14),
**characterized by**
the exhaust system heat exchanger (14) comprising a bypass pipe portion (28) provided at an axial center portion thereof for bypassing the heat exchange portion (14A);
and whereby the supported member overlapps with the bypass pipe portion (28) in the exhaust gas flow direction.

2. The support structure of an exhaust system heat exchanger of claim 1, wherein:
the supported member comprises a supported portion positioned so as to overlap with the heat exchange portion of the exhaust system heat exchanger in an exhaust gas flow direction; and
the support member (78) includes an elastic member (84), one end side of the elastic member (84) being attached to the supported portion of the supported member (78),
and the other end side of the elastic member (84) being supported at the vehicle body.

3. The support structure of an exhaust system heat exchanger of claim 1, wherein the supported member includes a rod member (78) that is fixed to a surface of the outer contour portion by welding.

4. The support structure of an exhaust system heat exchanger of claim 2, wherein the elastic member (84) comprises rubber.

5. The support structure of an exhaust system heat exchanger of claim 1, wherein a flow path of the cooling medium is positioned at an outermost layer of the heat exchange portion (14A) of the exhaust system heat exchanger (14).

## Patentansprüche

1. Tragkonstruktion für einen Abgassystem-Wärmetauscher, aufweisend:
einen Abgassystem-Wärmetauscher (14), der an einem Weg (10) eines Fahrzeug-Abgassystems vorgesehen ist und einen Wärmetauschabschnitt (14A) aufweist,
der einen Wärmeaustausch zwischen einem Abgas und einem Kühlmittel durchführt;
ein getragenes Element, das an einem Außenrandabschnitt (26D) befestigt ist, bei dem es sich um einen anderen Abschnitt handelt als den Wärmetauschabschnitt (14A) im Wärmetauscher (14) des Abgassystems; und ein Trägerelement (78),
welches das getragene Element an einer Fahrzeugkarosserie trägt,
wobei
das getragene Element an einem Abschnitt befestigt ist, der, in Abgasströmungsrichtung gesehen, dem Wärmetauschabschnitt (14A) vorgelagert oder nachgelagert im Außenrandabschnitt (26D) des Wärmetauschers (14) des Abgassystems angeordnet ist;
**dadurch gekennzeichnet, dass**
der Wärmetauscher (14) an einem axial mittleren Abschnitt des Abgassystems einen Umgehungsleitungsabschnitt (28) aufweist, um den Wärmetauschabschnitt (14A) zu umgehen;
und wobei das getragene Element den Umgehungsleitungsabschnitt (28) in Abgasströmungsrichtung überlappt.

2. Tragkonstruktion eines Abgassystem-Wärmetauschers nach Anspruch 1, wobei:
das getragene Element einen getragenen Abschnitt aufweist, der so angeordnet ist, dass er den Wärmetauschabschnitt des Abgassystem-Wärmetauschers in Abgasströmungsrichtung überlappt; und
das Trägerelement (78) ein elastisches Element (84) aufweist, wobei ein auf einer Seite befindliches Ende des elastischen Elements (84) am getragenen Abschnitt des Trägerelements (78) befestigt ist und das auf der anderen Seite befindliche Ende des elastischen Elements (84) von der Fahrzeugkarosserie getragen wird.

3. Tragkonstruktion für einen Abgassystem-Wärmetauscher nach Anspruch 1, wobei das getragene Element ein Stabelement (78) aufweist, das an einer Oberfläche des Außenrandabschnitts festgeschweißt ist.

4. Tragkonstruktion für einen Abgassystem-Wärmetauscher nach Anspruch 2, wobei das elastische Element (84) Gummi umfasst.

5. Tragkonstruktion für einen Abgassystem-Wärmetauscher nach Anspruch 1, wobei der Strömungsweg des Kühlmittels an einer äußersten Schicht des Wärmetauschabschitts (14A) des Abgassystem-Wärmetauschers (14) angeordnet ist.

## Revendications

1. Structure de support d'un échangeur thermique de système d'échappement, comprenant :
un échangeur thermique de système d'échappement (14) qui est prévu au niveau d'une voie (10) du système d'échappement d'un véhicule et qui possède une partie d'échange thermique (14A) qui effectue un échange thermique entre un gaz d'échappement et un milieu de refroidissement ;
un élément soutenu qui est fixé au niveau d'une partie de contour extérieur (26D) constituant une partie autre que la partie d'échange thermique (14A) dans l'échangeur thermique du système d'échappement (14) ; et un élément de support (78) qui soutient l'élément soutenu au niveau d'une carrosserie du véhicule,
moyennant quoi
l'élément soutenu étant fixé au niveau d'une partie qui est en amont ou en aval dans une direction de circulation des gaz d'échappement par rapport à la partie d'échange thermique (14A) dans la partie de contour extérieur (26D) de l'échangeur thermique du système d'échappement (14),
**caractérisée par**
l'échangeur thermique du système d'échappement (14) comprenant une partie de tuyau de dérivation (28) pourvue au niveau de sa partie centrale axiale pour contourner la partie d'échange thermique (14A) ;
et moyennant quoi l'élément soutenu chevauche la partie de tuyau de dérivation (28) dans la direction de circulation des gaz d'échappement.

2. Structure de support d'un échangeur thermique de système d'échappement de la revendication 1, dans laquelle :
l'élément soutenu comprend une partie soutenue positionnée de sorte à chevaucher la partie d'échange thermique de l'échangeur thermique du système d'échappement dans une direction de circulation des gaz d'échappement ; et
l'élément de support (78) comporte un élément élastique (84), un côté d'extrémité de l'élément élastique (84) étant fixé à la partie soutenue de l'élément soutenu (78), et l'autre côté d'extrémité de l'élément élastique (84) étant soutenu au niveau de la carrosserie du véhicule.

3. Structure de support d'un échangeur thermique de système d'échappement de la revendication 1, dans laquelle l'élément soutenu comporte un élément de tige (78) qui est fixé à une surface de la partie de contour extérieur par soudure.

4. Structure de support d'un échangeur thermique de système d'échappement de la revendication 2, dans laquelle l'élément élastique (84) comprend du caoutchouc.

5. Structure de support d'un échangeur thermique de système d'échappement de la revendication 1, dans laquelle une voie de circulation du milieu de refroidissement est positionnée au niveau de la couche la plus à l'extérieur de la partie d'échange thermique (14A) de l'échangeur thermique du système d'échappement (14).
